# EUROPEAN PATENT APPLICATION

(11) **EP 4 844 909 A1**
(43) Date of publication of application: **25.11.2026**
(21) Application number: 24926654.5
(22) Date of filing: 15.08.2024
(51) Int. Cl.: H01M 50/204

(54) **BATTERY MODULE, BATTERY PACK, AND ELECTRIC DEVICE**

(30) Priority: 26.02.2024 CN 202410211209
(71) Applicant: Contemporary Amperex Technology Co., Limited, Ningde, Fujian 352100 (CN)
(72) Inventor: HUANG, Weihong, Ningde, Fujian 352100 (CN); XU, Liangfan, Ningde, Fujian 352100 (CN); ZHANG, Qianqian, Ningde, Fujian 352100 (CN); YAO, Xin, Ningde, Fujian 352100 (CN); XU, Hu, Ningde, Fujian 352100 (CN); LI, Xing, Ningde, Fujian 352100 (CN); JIN, Haizu, Ningde, Fujian 352100 (CN)
(74) Representative: Kraus & Lederer PartGmbB
(86) International application number: PCT/CN2024/112351
(87) International publication number: WO 2025/179787

(57) **Abstract**

A battery module, a battery pack, and an electric device. The electric device comprises the battery pack; the battery pack comprises the battery module; and the battery module comprises at least one battery unit (1000), battery cells (100), and a sampling structure (200). The battery unit (1000) comprises the sampling structure (200) and two groups of battery cells (100), each group of battery cells (100) are formed by stacking a plurality of battery cells (100) in a first direction (W1), and the two groups of battery cells (100) are arranged side by side in a second direction (W2), wherein the first direction (W1) intersects the second direction (W2). The battery cells (100) each comprise an end cover (11), and a first pole (12), a second pole (13) and a detection pole (14) which are provided on the end cover (11); the second pole (13) is electrically connected to the detection pole (14); the sampling structure (200) is arranged on the top side of the junction between the two groups of battery cells (100), and is respectively electrically connected to the first poles (12) and the detection poles (14) of each group of battery cells (100), such that the two groups of battery cells (100) share the sampling structure (200).

## Description

### CROSS-REFERENCE TO RELATED APPLICATION

The present disclosure is based on and claims priority to Chinese Patent Application No. 202410211209.6, filed on February 26, 2024 and entitled "BATTERY MODULE, BATTERY PACK, AND ELECTRICAL APPARATUS", which is incorporated herein by reference in its entirety.

### TECHNICAL FIELD

The present disclosure relates to the technical field of batteries, and in particular, to a battery module, a battery pack, and an electrical apparatus.

### BACKGROUND

As the electric vehicle industry continues to develop, the packaging technology of electric vehicle power battery systems is also constantly improving, and the automation and modularization of power battery system packaging are gradually becoming the mainstream of development. The battery module in the power battery system is quite important. In related technologies, a sampling structure is provided on the top side of each row of stacked battery cells. The sampling structure is connected to the positive and negative terminal posts of the battery cells by aluminum wire bonding, thereby realizing the collection of information such as the voltage of the battery cells.

However, this configuration increases the difficulty of arranging the sampling structures and the quantity of sampling structures used.

### SUMMARY

In view of this, embodiments of the present disclosure are intended to provide a battery module, a battery pack, and an electrical apparatus, aiming to reduce the quantity of sampling structures used and the difficulty of arranging the sampling structures.

In a first aspect, an embodiment of the present disclosure provides a battery module, including:
at least one battery unit which includes a sampling structure and two groups of battery cells, each group of battery cells being formed by stacking a plurality of battery cells in a first direction, and the two groups of battery cells being arranged side by side in a second direction, wherein the first direction intersects the second direction;
the battery cells each comprising an end cover, and a first terminal post, a second terminal post and a detection terminal post which are provided on the end cover, the second terminal post being electrically connected to the detection terminal post;
the sampling structure being provided on the top side of the junction between the two groups of battery cells, the first terminal post being located at the end of the end cover near the sampling structure, the distance from the sampling structure to the detection terminal post being less than the distance from the sampling structure to the second terminal post;
the sampling structure being respectively electrically connected to the first terminal posts and the detection terminal posts of each group of battery cells, such that the two groups of battery cells share the sampling structure.

In the battery module provided by the embodiment of the present disclosure, the detection terminal post is electrically connected to the second terminal post, and the sampling structure is electrically connected to the detection terminal posts and the first terminal posts of each group of battery cells, such that the two groups of battery cells share the sampling structure. This reduces the quantity of sampling structures used. Since the detection terminal post is closer to the sampling structure than the second terminal post, and the first terminal post is also relatively close to the sampling structure, the electrical connection path between the sampling structure and the first terminal post and the detection terminal post can be shortened, thereby reducing the difficulty of arranging the sampling structure.

In some embodiments, the sampling structure includes a flexible circuit board. In this way, the flexible circuit board can be freely bent, wound, and folded, and can be arranged arbitrarily according to spatial layout requirements, and can move and stretch arbitrarily in three-dimensional space. In battery modules, using a flexible circuit board to sample the voltage of various battery cells has advantages such as low cost, high space utilization, and ease of automated production.

In some embodiments, the two groups of battery cells are arranged symmetrically.

This configuration facilitates the neat arrangement of the battery unit.

In some embodiments, the first terminal posts of the two groups of battery cells have the same polarity. This configuration facilitates the arrangement of the sampling structure.

In some embodiments, the first terminal posts in the same group of battery cells have the same polarity, and the first terminal posts in the two groups of battery cells have different polarities.

This allows the battery module to meet the transmission connection method of total positive and total negative.

In some embodiments, the detection terminal post is located between the first terminal post and the second terminal post.

This configuration makes full use of the area between the first terminal post and second terminal post on the end cover, facilitating the provision of the detection terminal post.

In some embodiments, the second terminal post, the detection terminal post, and the first terminal post are arranged along the same straight line. This allows the three components to be arranged neatly and aesthetically on the end cover.

In some embodiments, the distance from the detection terminal post to the first terminal post is less than the distance from the detection terminal post to the second terminal post.

This configuration allows the detection terminal post to be placed closer to the second terminal post, which is further equivalent to shortening the distance between the detection terminal post and the sampling structure, facilitating the electrical connection between the detection terminal post and the sampling structure.

In some embodiments, the battery cell further includes an explosion-proof valve disposed on the end cover, the explosion-proof valve being located between the first terminal post and the second terminal post, and the detection terminal post being located between the explosion-proof valve and the first terminal post. This configuration allows the detection terminal post to be placed close to the sampling structure, reducing the difficulty of connecting the detection terminal post to the sampling structure and thus reducing the difficulty of arranging the sampling structure.

In some embodiments, the distance from the detection terminal post to the first terminal post is less than the distance from the detection terminal post to the explosion-proof valve. This allows the detection terminal post to be placed close to the sampling structure.

In some embodiments, the outer diameter of the detection terminal post is smaller than the outer diameter of the first terminal post; and/or, the outer diameter of the detection terminal post is smaller than the outer diameter of the second terminal post. Thus, the relatively small outer diameter of the detection terminal post can reduce the impact of the detection terminal post on the current convergence of the first terminal post and the impact of the detection terminal post on the current convergence of the second terminal post, and also reduce the area occupied by the detection terminal post on the end cover.

In some embodiments, the protrusion height of the detection terminal post on the end cover is less than the protrusion height of the first terminal post on the end cover; and/or, the protrusion height of the detection terminal post on the end cover is less than the protrusion height of the second terminal post on the end cover.

This configuration reduces the impact of the detection terminal post on the current convergence of the first terminal post and the impact of the detection terminal post on the current convergence of the second terminal post.

In some embodiments, the battery unit includes a first adapter piece, and the first terminal post and the detection terminal post are electrically connected to the first adapter piece.

In this way, the electrical connection between the detection terminal post and the first terminal post can be achieved through the first adapter piece, without the need for additional aluminum wire bonding or conductive wire connection. The connection method is simple and reliable.

In some embodiments, the number of battery units is at least two, and at least some of the battery units are arranged side by side along the first direction; and/or, at least some of the battery units are arranged side by side along the second direction.

This increases the diversity and flexibility of arrangement of the battery units, thereby increasing the diversity of the battery module.

In a second aspect, an embodiment of the present disclosure provides a battery pack including the battery module described in any embodiment of the present disclosure.

In the battery pack provided by the embodiment of the present disclosure, by adopting the above-mentioned battery module, the quantity of sampling structures used in the battery module can be reduced, and the difficulty of arranging the sampling structures can be reduced. This can further reduce the quantity of sampling structures used in the battery pack and reduce the difficulty of arranging the sampling structures.

In an electrical apparatus provided by the embodiment of the present disclosure, by adopting the above-mentioned battery module or battery pack, the quantity of sampling structures used in the battery module can be reduced, and the difficulty of arranging the sampling structures can be reduced. This can further reduce the quantity of sampling structures used in the battery pack and reduce the difficulty of arranging the sampling structures. This results in an electrical apparatus having lower costs and higher reliability.

The above description is only a summary of the technical solutions of the present disclosure, and in order to understand more clearly the technical means of the present disclosure for implementation in accordance with the contents of the specification, and in order to make the above and other objects, features and advantages of the present disclosure more apparent and readily understandable, a detailed description of the present disclosure is hereby set forth below.

### BRIEF DESCRIPTION OF DRAWINGS

FIG. 1 is a schematic partial structural diagram of a battery module provided by some embodiments of the present disclosure;
FIG. 2 is a schematic diagram of an end cover, a first terminal post, a second terminal post, a detection terminal post and an explosion-proof valve of a battery cell provided by some embodiments of the present disclosure; and
FIG. 3 is a schematic partial enlarged diagram of part A in FIG. 2.

Description of reference numerals:
1000: battery unit; 100: battery cell; 200: sampling structure; 11: end cover; 12: first terminal post; 13: second terminal post; 14: detection terminal post; 15: explosion-proof valve; D1: outer diameter of detection terminal post; D2: outer diameter of first terminal post; D3: outer diameter of second terminal post; L1: distance from detection terminal post to sampling structure; L2: distance from sampling structure to second terminal post; L3: distance from first terminal post to sampling structure; L4: distance from first terminal post to detection terminal post; L5: distance from first terminal post to explosion-proof valve; H1: protrusion height of detection terminal post on end cover; H2: protrusion height of first terminal post on end cover; W1: first direction; W2: second direction.

### DETAILED DESCRIPTION OF EMBODIMENTS

In order to make the object, technical solutions and advantages of the present invention clearer, the present invention will be described in further detail below in conjunction with the drawings and embodiments. It should be understood that the specific embodiments described herein are merely used to explain the present invention but are not intended to limit the present invention.

The specific technical features described in the specific embodiments can be combined in any suitable manner without contradiction. For example, different embodiments and technical solutions can be formed by combining different specific technical features. In order to avoid unnecessary repetition, various possible combinations of specific technical features in the present invention will not be described separately.

In the following description, the terms "first, second, ..." are used only to distinguish different objects and do not indicate that the objects have the sameness or association. It should be understood that the orientation descriptions "above," "below," "outside," and "inside" refer to the orientations under normal use. The "left" and "right" directions refer to the left and right directions shown in the corresponding diagrams, which may or may not be the left and right directions under normal use.

It should be further noted that the term "include," "comprise" or other variations thereof are intended to cover non-exclusive including, so that a process, method, article, or apparatus including a series of elements not only includes the elements, but also includes other elements not clearly listed, or further includes inherent elements of the process, method, article, or apparatus. Without more limitations, elements defined by a statement "including one ..." do not exclude the existence of other identical elements in the process, method, article, or apparatus that includes the elements. For example, the term "a plurality of" means greater than or equal to two.

At present, new energy batteries are increasingly used in daily life and industry. New energy batteries are not only applied in energy storage power source systems such as hydropower, thermal power, wind power, and solar power stations, but also widely applied in electric transportation tools, such as electric bicycles, electric motorcycles, and electric vehicles, as well as other fields. With the continuous expansion of the application field of power batteries, their market demand is also constantly increasing.

In related technologies, the automation and modularization of power battery system packaging are gradually becoming the mainstream of development. The battery module in the power battery system is quite important. In related technologies, a sampling structure is provided on the top side of each row of stacked battery cells. The sampling structure is connected to the positive and negative terminal posts of the battery cells by aluminum wire bonding, thereby realizing the collection of information such as the voltage of the battery cells.

However, this configuration increases the difficulty of arranging the sampling structures and the quantity of sampling structures used.

In view of the above problems, an embodiment of the present disclosure provides a battery module including at least one battery unit.

The battery unit includes a sampling structure and two groups of battery cells, each group of battery cells are formed by stacking a plurality of battery cells in a first direction, and the two groups of battery cells are arranged side by side in a second direction, wherein the first direction intersects the second direction. The battery cells each include an end cover, and a first terminal post, a second terminal post and a detection terminal post which are provided on the end cover, the second terminal post being electrically connected to the detection terminal post. The sampling structure is provided on the top side of the junction between the two groups of battery cells, the first terminal post is located at the end of the end cover near the sampling structure, and the distance from the sampling structure to the detection terminal post is less than the distance from the sampling structure to the second terminal post. The sampling structure is respectively electrically connected to the first terminal posts and the detection terminal posts of each group of battery cells, such that the two groups of battery cells share the sampling structure. This reduces the quantity of sampling structures used. Since the detection terminal post is closer to the sampling structure than the second terminal post, and the first terminal post is also relatively close to the sampling structure, the electrical connection path between the sampling structure and the first terminal post and the detection terminal post can be shortened, thereby reducing the difficulty of arranging the sampling structure.

An embodiment of the present disclosure provides a battery pack including the battery module described above.

An embodiment of the present disclosure further provides an electrical apparatus including the battery module or battery pack described above. The battery module or battery pack can provide electric energy for the electrical apparatus. The electrical apparatus can be, but is not limited to, mobile phones, tablet computers, notebook computers, electric toys, electric tools, battery vehicles, electric automobiles, ships, spacecraft and the like. Here, the electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

In the following embodiments, for the sake of illustration, the electrical apparatus in an embodiment of the present disclosure is exemplified by a vehicle.

The vehicle may be a fuel vehicle, a gas vehicle or a new energy vehicle, and the new energy vehicle may be a pure electric vehicle, a hybrid electric vehicle or an extended-range vehicle and the like. A battery is provided inside the vehicle and may be arranged at the bottom or head or tail of the vehicle. The battery may be used to power the vehicle. For example, the battery may be used as an operating power source of the vehicle. The vehicle can further include a controller and a motor, and the controller is configured to control the battery to supply power to the motor, for example, the controller is configured to meet the working power consumption requirements of the vehicle in starting, navigation and driving.

In some embodiments of the present disclosure, the battery can be used as an operating power supply of the vehicle, and can also be used as a driving power supply of the vehicle to replace or partially replace fuel oil or natural gas to provide driving power for the vehicle.

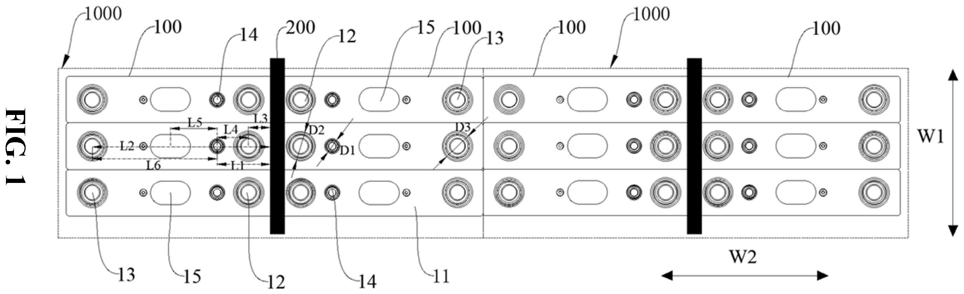

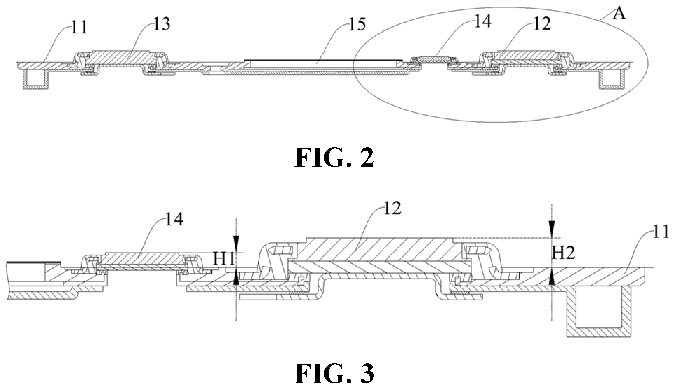

An embodiment of the present disclosure provides a battery module, referring to FIG. 1, including at least one battery unit 1000. The battery unit 1000 includes a sampling structure 200 and two groups of battery cells 100. Each group of battery cells 100 is formed by stacking a plurality of battery cells 100 in a first direction W1, and the two groups of battery cells 100 are arranged side by side in a second direction W2, where the first direction W1 intersects the second direction W2. Referring to FIG. 2, the battery cells 100 each include an end cover 11, and a first terminal post 12, a second terminal post 13 and a detection terminal post 14 which are provided on the end cover 11, the second terminal post 13 being electrically connected to the detection terminal post 14. The sampling structure 200 is provided on the top side of the junction between the two groups of battery cells 100. The first terminal post 12 is located at the end of the end cover 11 near the sampling structure 200, the distance L1 from the sampling structure 200 to the detection terminal post 14 being less than the distance L2 from the sampling structure 200 to the second terminal post 13. The sampling structure 200 is respectively electrically connected to the first terminal posts 12 and the detection terminal posts 14 of each group of battery cells 100, such that the two groups of battery cells 100 share the sampling structure 200.

In FIG. 1, the structure within the dashed box represents a battery unit 1000. FIG. 1 shows two dashed boxes, which exemplarily represent two battery units 1000. It can be understood that in the embodiment of the present disclosure, the number of battery units 1000 is not limited to this, and may be one, two or more, etc.

It should be noted that since the first terminal post 12 is located at the end of the end cover 11 near the sampling structure 200, the distance L3 from the sampling structure 200 to the first terminal post 12 is less than the distance L2 from the sampling structure 200 to the second terminal post 13. That is, in the embodiment of the present disclosure, L3 < L2 and L1 < L2.

Here, the distance L1 from the sampling structure 200 to the detection terminal post 14 refers to the distance between the edge of the sampling structure 200 on the side close to the detection terminal post 14 and the center of the detection terminal post 14.

The distance L2 from the sampling structure 200 to the second terminal post 13 refers to the distance between the edge of the sampling structure 200 on the side close to the detection terminal post 14 and the center of the second terminal post 13.

The distance L3 from the sampling structure 200 to the first terminal post 12 refers to the distance between the edge of the sampling structure 200 on the side close to the detection terminal post 14 and the center of the first terminal post 12.

The battery cell 100 refers to the basic apparatus and unit that directly converts chemical energy into electrical energy; it is the basic element that constitutes a battery. Its components include electrolyte, positive and negative electrodes, and a separator, etc. The battery cell 100 is also the smallest unit that constitutes the power battery module. That is to say, the battery is in the form of a single unit, without internal series or parallel connection. The external electrodes are also directly led out from the battery cell 100.

The sampling structure 200 refers to the structure for transmitting electrical signals collected from various battery units 1000.

By way of example, the battery cell includes a case and an electrode assembly. The case has an opening, and the end cover 11 described above closes the opening. The electrode assembly is disposed inside the case. The case and the end cover 11 are the external structural components of the battery cell.

The electrode assembly is a component of a battery cell where an electrochemical reaction occurs. One or more electrode assemblies may be contained within the case. The electrode assembly is mainly formed by winding electrode plates (a positive electrode plate and a negative electrode plate), and a separator is generally arranged between the positive electrode plate and the negative electrode plate. Portions, with active materials, of the electrode plates (the positive electrode plate and the negative electrode plate) constitute a main body part of the electrode assembly, which is connected to the tabs. A positive electrode tab and a negative electrode tab can be jointly located at one end of the main body part or respectively located at two ends of the main body part. During charging and discharging of the battery, the positive electrode active material and the negative electrode active material react with an electrolyte, and the tabs are connected to the terminal posts to form a current loop.

It should be noted that one of the first terminal post 12 and the second terminal post 13 is a positive electrode, and the other one is a negative electrode.

Here, one of the first terminal post 12 and the second terminal post 13 establishes a conductive path with the positive electrode tab, and the other establishes a conductive path with the negative electrode tab.

The end cover 11 is a component which isolates the internal environment of the battery cell 100 from the external environment. The end cover 11 may be made of a material (such as an aluminum alloy) with a certain hardness and strength, such that the end cover 11 is less prone to deformation when pressed and collided, enabling the battery cell 100 to have a higher structural strength, and further improving the safety performance.

The end cover 11 may alternatively be made of various materials, such as copper, iron, aluminum, stainless steel, aluminum alloy, and plastic, which is not specially limited in the embodiment of the present disclosure. In some embodiments, an insulating member may further be provided on an inner side of the end cover 11, so as to reduce the risk of short circuit. By way of example, the insulating member may be made of plastic, rubber, and the like.

The first terminal post 12 (or the second terminal post 13) is a component with conductive properties. The first terminal post 12 (or the second terminal post 13) serves as the current transmission end of the battery cell 100 for transmitting current.

The expression "the sampling structure 200 is provided on the top side of the junction between the two groups of battery cells 100" means that the sampling structure 200 is arranged substantially in the first direction W1 and blocks the arrangement gap between the two groups of battery cells 100. In other words, a portion of the sampling structure 200 along its width direction is located on the top side of one group of battery cells 100, and the other portion is located on the top side of the other group of battery cells 100.

The expression "the second terminal post 13 is electrically connected to the detection terminal post 14" means that the second terminal post 13 and the detection terminal post 14 have the same potential. For example, the two can be electrically connected by bonding with aluminum wire or by internal adapter pieces.

The expression "the sampling structure 200 is respectively electrically connected to the first terminal posts 12 and the detection terminal posts 14 of each group of battery cells 100" means, for example, that one group of battery cells 100 in a single battery unit 1000 is a first group of battery cells, and the other group of battery cells 100 is a second group of battery cells. The sampling structure 200 is electrically connected to the first terminal post 12 and the detection terminal post 14 of each battery cell in the first group of battery cells, and is also electrically connected to the first terminal post 12 and the detection terminal post 14 of each battery cell in the first group of battery cells.

In the battery module of the embodiment of the present disclosure, the detection terminal post 14 is electrically connected to the second terminal post 13, and the sampling structure 200 is electrically connected to the detection terminal posts 14 and the first terminal posts 12 of each group of battery cells 100. Therefore, the two groups of battery cells 100 share the sampling structure 200, which reduces the quantity of sampling structures 200 used. Since the detection terminal post 14 is closer to the sampling structure 200 than the second terminal post 13, and the first terminal post 12 is also relatively close to the sampling structure 200, the electrical connection path between the sampling structure 200 and the first terminal post 12 and the detection terminal post 14 can be shortened, thereby reducing the difficulty of arranging the sampling structure 200. In other words, the embodiment of the present disclosure can reduce the difficulty of arranging the sampling structure 200 while saving costs.

In the embodiment of the present disclosure, taking a rectangular battery cell as an example, the large surfaces of the same group of battery cells are fitted to each other and stacked together, and the small surfaces of the two groups of battery cells are arranged and fitted to each other. In other words, the first direction W1 is parallel to the arrangement direction of the large surfaces of the battery cell, and the second direction W2 is parallel to the arrangement direction of the small surfaces of the battery cell.

The specific type of the sampling structure 200 is not limited.

For example, in some embodiments, the sampling structure 200 includes a flexible circuit board. Flexible circuit boards are printed circuits made of flexible insulating substrates. They have many advantages, such as the ability to be bent, wound, and fold freely, to be arranged arbitrarily according to spatial layout requirements, and to move and stretch arbitrarily in three-dimensional space. In battery modules, using a flexible circuit board to sample the voltage of various battery cells 100 has advantages such as low cost, high space utilization, and ease of automated production.

In some other embodiments, the sampling structure 200 includes a wire harness formed by a plurality of wires constrained together.

In some embodiments, the two groups of battery cells 100 are symmetrically arranged. Here, the symmetrical arrangement can be understood as mirroring one group of battery cells 100 about the plane of symmetry to obtain the other group of battery cells. The symmetrical arrangement is beneficial for the neat arrangement of the battery unit 1000.

Of course, in other embodiments, the two groups of battery cells 100 may alternatively be arranged asymmetrically.

In some embodiments, the first terminal posts 12 of the two groups of battery cells 100 have the same polarity. For example, in FIG. 1, the first terminal posts 12 of one group of battery cells 100 are all positive, and the first terminal posts 12 of the other group of battery cells 100 are also positive. As another example, in FIG. 1, the first terminal posts 12 of one group of battery cells 100 are all negative, and the first terminal posts 12 of the other group of battery cells 100 are also negative. This configuration facilitates the arrangement of the sampling structure.

In some embodiments, the first terminal posts 12 in the same group of battery cells 100 have the same polarity, and the first terminal posts 12 in the two groups of battery cells 100 have different polarities. For example, in FIG. 1, the first terminal posts 12 of one group of battery cells 100 are all positive, and the first terminal posts 12 of the other group of battery cells 100 are all negative. This allows the battery module to meet the transmission connection method of total positive and total negative.

The specific location of the detection terminal post 14 is not limited.

For example, in some embodiments, the detection terminal post 14 is located between the first terminal post 12 and the second terminal post 13. This configuration makes full use of the area between the first terminal post 12 and the second terminal post 13 on the end cover 11, facilitating the provision of the detection terminal post 14. In some embodiments, the second terminal post 13, the detection terminal post 14, and the first terminal post 12 are arranged along the same straight line. Here, the expression "arranged along the same straight line" means that the centers of the three are located on the same straight line. In this embodiment, the second terminal post 13, the detection terminal post 14, and the first terminal post 12 are arranged along the same straight line, which makes their arrangement on the end cover 11 neat and aesthetically pleasing.

It should be noted that in other embodiments, the centers of the second terminal post 13, the detection terminal post 14, and the first terminal post 12 may not be on the same straight line.

In some embodiments, the distance L4 from the detection terminal post 14 to the first terminal post 12 is less than the distance L6 from the detection terminal post 14 to the second terminal post 13, i.e., L4 < L6. This configuration allows the detection terminal post 14 to be placed closer to the second terminal post 13, which is further equivalent to shortening the distance between the detection terminal post 14 and the sampling structure 200, facilitating the electrical connection between the detection terminal post 14 and the sampling structure 200.

Here, the distance L4 from the detection terminal post 14 to the first terminal post 12 refers to the distance from the center of the detection terminal post 14 to the center of the first terminal post 12.

The distance L6 from the detection terminal post 14 to the second terminal post 13 refers to the distance from the center of the detection terminal post 14 to the center of the second terminal post 13.

In some embodiments, the battery cell 100 further includes an explosion-proof valve 15, and the explosion-proof valve 15 is disposed on the end cover 11. The explosion-proof valve 15 is located between the first terminal post 12 and the second terminal post 13, and the detection terminal post 14 is located between the explosion-proof valve 15 and the first terminal post 12.

The explosion-proof valve 15 is used to prevent and respond to overpressure or overheating problems that may occur in the battery cell 100 under certain conditions, thereby avoiding the occurrence of explosion accidents of the battery cells 100.

In this embodiment, the explosion-proof valve 15 is located between the first terminal post 12 and the second terminal post 13, and the detection terminal post 14 is located between the explosion-proof valve 15 and the first terminal post 12. This allows the detection terminal post 14 to be close to the sampling structure 200, reducing the difficulty of connecting the detection terminal post 14 to the sampling structure 200, and thus reducing the difficulty of arranging the sampling structure 200.

In some embodiments, the distance L4 from the detection terminal post 14 to the first terminal post 12 is less than the distance L5 from the detection terminal post 14 to the explosion-proof valve 15, i.e., L4 < L5. In other words, compared to the explosion-proof valve 15, the detection terminal post 14 is closer to the first terminal post 12, that is, the detection terminal post 14 is closer to the sampling structure 200.

Here, the distance L5 from the detection terminal post 14 to the explosion-proof valve 15 refers to the distance from the center of the detection terminal post 14 to the center of the explosion-proof valve 15.

If the projection shape of the explosion-proof valve 15 on the end cover 11 is circular, then the center of the projection of the explosion-proof valve 15 is the center of the explosion-proof valve 15. If the projection shape of the explosion-proof valve 15 on the end cover 11 is elliptical, the midpoint of the major axis of the ellipse is the center of the explosion-proof valve 15.

In some embodiments, the outer diameter D1 of the detection terminal post 14 is smaller than the outer diameter D2 of the first terminal post 12, i.e., D1 < D2; and/or, the outer diameter D1 of the detection terminal post is smaller than the outer diameter D3 of the second terminal post 13, i.e., D1 < D3. Thus, the relatively small outer diameter D1 of the detection terminal post 14 can reduce the impact of the detection terminal post 14 on the current convergence of the first terminal post 12 and the impact of the detection terminal post 14 on the current convergence of the second terminal post 13, and also reduce the area occupied by the detection terminal post 14 on the end cover 11.

In some embodiments, the outer diameter D2 of the first terminal post 12 and the outer diameter D3 of the second terminal post 13 are the same, that is, D2=D3.

The outer diameter D1 of the detection terminal post 14, the outer diameter D2 of the first detection terminal post 12, and the outer diameter of the second detection terminal post 13 can all be measured using vernier calipers or micrometers.

The outer diameter D1 of the detection terminal post 14 is the maximum diameter of the portion of the detection terminal post 14 that protrudes from the end cover 11.

The outer diameter D2 of the first terminal post 12 is the maximum diameter of the portion of the first terminal post 12 that protrudes from the end cover 11.

The outer diameter D3 of the second terminal post 13 is the maximum diameter of the portion of the second terminal post 13 that protrudes from the end cover 11.

In some embodiments, referring to FIG. 3, the protrusion height H1 of the detection terminal post 14 on the end cover 11 is less than the protrusion height H2 of the first terminal post 12 on the end cover 11, i.e., H1 < H2; and/or, the protrusion height of the detection terminal post 14 on the end cover 11 is less than the protrusion height of the second terminal post 13 on the end cover 11. This can reduce the impact of the detection terminal post 14 on the current convergence of the first terminal post 12 and the impact of the detection terminal post 14 on the current convergence of the second terminal post 13.

Here, the protrusion height H1 of the detection terminal post 14 on the end cover 11 is the distance from the highest point of the detection terminal post 14 to the reference plane of the outer surface of the end cover 11. Here, the reference plane of the end cover 11 can be understood as a part of a flat metal plate that has been processed, and the outer surface of the flat metal plate is the reference plane.

The protrusion height of the first terminal post 12 and the second terminal post 13 on the end cover 11 can be understood as the distance from the highest point of the first terminal post 12 and the second terminal post 13 to the aforementioned reference plane.

In some embodiments, the protrusion height H2 of the first terminal post 12 on the end cover 11 is the same as the protrusion height of the second terminal post 13 on the end cover 11.

In some embodiments, the battery unit 1000 includes a first adapter piece, and the first terminal post 12 and the detection terminal post 14 are electrically connected to the first adapter piece. The first adapter piece is used to realize the electrical connection between the first terminal post 12 and the corresponding tab. In this way, the electrical connection between the detection terminal post 14 and the first terminal post 12 can be achieved through the first adapter piece, without the need for additional aluminum wire bonding or conductive wire connection. The connection method is simple and reliable.

The number of battery units 1000 may be one or two or more.

In some embodiments, the number of battery units 1000 is at least two, and at least some of the battery units 1000 are arranged side by side along the first direction W1; and/or, at least some of the battery units 1000 are arranged side by side along the second direction W2. This increases the diversity and flexibility of arrangement of the battery units 1000, thereby increasing the diversity of the battery module.

In the description of the present disclosure, the description with reference to the terms such as "an embodiment," "some embodiments," "examples," "specific examples," "some examples," or the like means that specific features, structures, materials, or characteristics described in conjunction with the embodiment(s) or example(s) are included in at least one embodiment or example of the embodiments of the present disclosure. In the present disclosure, the illustrative expressions of the above-mentioned terms do not necessarily refer to the same embodiment or example. Moreover, the specific features, structures, materials, or characteristics described may be combined in any one or more embodiments or examples in a suitable manner. In addition, those skilled in the art may combine various embodiments or examples described in the present disclosure and features of the various embodiments or examples provided they are not contradictory to each other.

The above description is merely made of preferred embodiments of the present disclosure, but is not intended to limit the present disclosure. It is apparent to those skilled in the art that various modifications and changes may be made to the present disclosure. Any modifications, equivalent replacements, improvements, and the like made within the spirit and principle of the present disclosure shall be included within the scope of protection of the present disclosure.

## Claims

1. A battery module, comprising at least one battery unit which comprises a sampling structure and two groups of battery cells, wherein each group of battery cells is formed by stacking a plurality of battery cells in a first direction, and the two groups of battery cells are arranged side by side in a second direction, the first direction intersecting the second direction;
the battery cells each comprise an end cover, and a first terminal post, a second terminal post and a detection terminal post which are provided on the end cover, the second terminal post being electrically connected to the detection terminal post;
the sampling structure is provided on the top side of the junction between the two groups of battery cells, the first terminal post is located at the end of the end cover near the sampling structure, and the distance from the sampling structure to the detection terminal post is less than the distance from the sampling structure to the second terminal post; and
the sampling structure is respectively electrically connected to the first terminal posts and the detection terminal posts of each group of battery cells, such that the two groups of battery cells share the sampling structure.

2. The battery module according to claim 1, wherein the sampling structure comprises a flexible circuit board.

3. The battery module according to claim 1, wherein the sampling structure comprises a wire harness formed by a plurality of wires constrained together.

4. The battery module according to any one of claims 1 to 3, wherein the two groups of battery cells are symmetrically arranged.

5. The battery module according to any one of claims 1 to 4, wherein the first terminal posts of the two groups of battery cells have the same polarity.

6. The battery module according to any one of claims 1 to 5, wherein the first terminal posts in the same group of battery cells have the same polarity, and the first terminal posts in the two groups of battery cells have different polarities.

7. The battery module according to any one of claims 1 to 6, wherein the detection terminal post is located between the first terminal post and the second terminal post.

8. The battery module according to claim 7, wherein the second terminal post, the detection terminal post, and the first terminal post are arranged along the same straight line.

9. The battery module according to claim 7 or 8, wherein the distance from the detection terminal post to the first terminal post is less than the distance from the detection terminal post to the second terminal post.

10. The battery module according to any one of claims 1 to 9, wherein the battery cell further comprises an explosion-proof valve disposed on the end cover, the explosion-proof valve is located between the first terminal post and the second terminal post, and the detection terminal post is located between the explosion-proof valve and the first terminal post.

11. The battery module according to claim 10, wherein the distance from the detection terminal post to the first terminal post is less than the distance from the detection terminal post to the explosion-proof valve.

12. The battery module according to any one of claims 1 to 11, wherein the outer diameter of the detection terminal post is smaller than the outer diameter of the first terminal post.

13. The battery module according to any one of claims 1 to 12, wherein the outer diameter of the detection terminal post is smaller than the outer diameter of the second terminal post.

14. The battery module according to any one of claims 1 to 13, wherein the outer diameter of the first terminal post and the outer diameter of the second terminal post are the same.

15. The battery module according to any one of claims 1 to 14, wherein the protrusion height of the detection terminal post on the end cover is less than the protrusion height of the first terminal post on the end cover.

16. The battery module according to any one of claims 1 to 15, wherein the protrusion height of the detection terminal post on the end cover is less than the protrusion height of the second terminal post on the end cover.

17. The battery module according to any one of claims 1 to 16, wherein the battery unit comprises a first adapter piece, and the first terminal post and the detection terminal post are electrically connected to the first adapter piece.

18. The battery module according to any one of claims 1 to 17, wherein the number of the battery units is at least two, and at least some of the battery units are arranged side by side along the first direction; and/or, at least some of the battery units are arranged side by side along the second direction.

19. A battery pack comprising the battery module of any one of claims 1 to 18.

20. An electrical apparatus comprising the battery module of any one of claims 1 to 18 or the battery pack of claim 19.
